# EUROPÄISCHE PATENTSCHRIFT

(11) **EP 4 150 224 B1**
(45) Veröffentlichungstag und Bekanntmachung des Hinweises auf die Patenterteilung: **21.08.2024**
(21) Anmeldenummer: 21728411.6
(22) Anmeldetag: 07.05.2021
(51) Int. Cl.: F16C 17/10, F03D 80/70, F16C 33/04, F16C 33/06, F16C 33/08, F16C 33/20

(54) **ROTORHAUPTLAGERUNG EINER GONDEL FÜR EINE WINDKRAFTANLAGE**
ROTOR MAIN BEARING OF A NACELLE FOR A WIND TURBINE
PALIER PRINCIPAL DE ROTOR D'UNE NACELLE POUR UNE ÉOLIENNE

(30) Priorität: 12.05.2020 DE 102020112765
(43) Veröffentlichungstag der Anmeldung: 22.03.2023
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2021/060159
(87) Internationale Veröffentlichungsnummer: WO 2021/226645

(56) Entgegenhaltungen:
- EP-A1- 3 309 393
- WO-A1-2014/117197
- WO-A1-2015/110138
- WO-A1-2018/071941
- WO-A1-2019/020213
- WO-A1-2019/178630
- AT-A1- 509 625

## Beschreibung

Die Erfindung betrifft eine Gondel mit einer Rotorlagerung für eine Windkraftanlage.

Aus der EP 2 694 810 B1 ist beispielsweise eine Rotorlagerung für eine Windkraftanlage bekannt.

Die aus der EP 2 694 810 B1 bekannte Rotorlagerung weist einen komplexen Aufbau auf und ist daher teuer in der Herstellung und auch fehleranfällig,

Die WO2019/020213 A1 beschreibt eine Rotorlagerung für eine Windkraftanlage, bei welcher das äussere Ringelement Befestigungselemente aufweist, die jeweils ein Gleitlagerpad tragen.

Aufgabe der vorliegenden Erfindung war es, die Nachteile des Standes der Technik zu überwinden und eine Gondel für eine Windkraftanlage zur Verfügung zu stellen, welche eine verbesserte Rotorlagerung aufweist. Weiters war es die Aufgabe der vorliegenden Erfindung ein Verfahren zum Herstellen der Gondel für die Windkraftanlage anzugeben.

Diese Aufgabe wird durch eine Vorrichtung und ein Verfahren gemäß den Ansprüchen gelöst. Erfindungsgemäß ist eine Gondel für eine Windkraftanlage ausgebildet. Die Gondel umfasst:
- ein Gondelgehäuse;
- eine Rotornabe;
- eine Rotorlagerung zur Lagerung der Rotornabe am Gondelgehäuse, wobei die Rotorlagerung zumindest ein inneres Ringelement und zumindest ein äußeres Ringelement aufweist, wobei zwischen dem inneren Ringelement und dem äußeren Ringelement zumindest ein Gleitlagerelement ausgebildet ist. Das Gleitlagerelement ist untrennbar mit dem inneren Ringelement verbunden. Alternativ ist das Gleitlagerelement untrennbar mit dem äußeren Ringelement verbunden.

Das Gleitlagerelement weist eine Lauffläche auf. Die Lauffläche des Gleitlagerelementes wirkt mit einer Oberfläche des inneren Ringelementes zusammen, wenn das Gleitlagerelement untrennbar mit dem äußeren Ringelement verbunden ist. Die Lauffläche des Gleitlagerelementes wirkt mit einer Oberfläche des äußeren Ringelementes zusammen, wenn das Gleitlagerelement untrennbar mit dem inneren Ringelement verbunden ist.

Die erfindungsgemäße Gondel, insbesondere die Rotorlagerung der Gondel, bringt den überraschenden Vorteil mit sich, dass sie einen einfachen Aufbau aufweist und wenig fehleranfällig ist bzw. eine hohe Lebensdauer aufweist.

Weiters kann es zweckmäßig sein, wenn das innere Ringelement als integraler Bestandteil einer Rotorwelle zur Aufnahme der Rotornabe oder als integraler Bestandteil der Rotornabe selbst ausgebildet ist. Dies bringt eine weitere Vereinfachung des Aufbaues der Gondel und eine überraschende Erhöhung der Ausfallssicherheit mit sich.

Ferner kann vorgesehen sein, dass das äußere Ringelement als integraler Bestandteil des Gondelgehäuses oder eines im Gondelgehäuse aufgenommenen Lagerbockes ausgebildet ist. Dies bringt eine weitere Vereinfachung des Aufbaues der Gondel und eine überraschende Erhöhung der Ausfallssicherheit mit sich.

Als Gondelgehäuse wird die Gesamtheit der tragenden Gondelbauteile bezeichnet. Dies kann beispielsweise auch ein Gondelhauptrahmen der Gondel sein. Insbesondere kann vorgesehen sein, dass das äußere Ringelement im Gondelhauptrahmen ausgebildet ist.

Wenn das äußere Ringelement als integraler Bestandteil eines im Gondelgehäuse aufgenommenen Lagerbockes ausgebildet ist, kann vorgesehen sein, dass der Lagerbock radial geteilt ausgebildet ist. Der Lagerbock kann beispielsweise in zwei Lagerbockhälften geteilt ausgebildet sein. Hierbei ist es denkbar, dass in beiden der Lagerbockhälften ein Teil des Gleitlagerelementes ausgebildet ist, bzw. mit diesen verbunden ist.

Mit anderen Worten ausgedrückt, kann das Gleitlagerelement zusammen mit dem das Gleitlagerelement aufnehmenden inneren Ringelement oder äußeren Ringelement radial oder auch axial geteilt ausgebildet sein.

Darüber hinaus kann vorgesehen sein, dass das Gleitlagerelement stoffschlüssig mit dem inneren Ringelement verbunden ist oder dass das Gleitlagerelement stoffschlüssig mit dem äußeren Ringelement verbunden ist. Besonders eine derartige stoffschlüssige Verbindung des Gleitlagerelementes mit dem Ringelement bringt überraschende Erhöhung der Ausfallssicherheit mit sich. Besonders in Verbindung mit der Maßnahme wonach das innere Ringelement als integraler Bestandteil einer Rotorwelle zur Aufnahme der Rotornabe oder als integraler Bestandteil der Rotornabe selbst ausgebildet ist lassen sich zusätzliche Verbesserungen in der Ausfallsicherheit erzielen.

Erfindungsgemäß ist das Gleitlagerelement als Beschichtung ausgebildet, welche direkt auf das innere Ringelement oder das äußere Ringelement aufgebracht ist. Eine direkt auf das Ringelement aufgebrachte Beschichtung ist besonders einfach und formgenau herzustellen.

Gemäß einer Weiterbildung ist es möglich, dass das Gleitlagerelement zur gleichzeitigen Radiallagerung und Axiallagerung der Rotornabe ausgebildet ist. Dies bringt den Vorteil mich sich, dass für die Radiallagerung und die Axiallagerung der Rotornabe keine eigenen Lagerelemente ausgebildet sein müssen.

Weiters kann vorgesehen sein, dass das Gleitlagerelement im Bereich der Radiallagerung andere Materialeigenschaften aufweist, als im Bereich der Axiallagerung. Dies bringt den Vorteil mit sich, dass das Gleitlagerelement auf die jeweiligen unterschiedlichen Belastungen der Radiallagerung und der Axiallagerung angepasste Gleiteigenschaften aufweisen kann. Insbesondere kann vorgesehen sein, dass das Gleitlagerelement im Bereich der Radiallagerung eine höhere Festigkeit und/oder eine höhere Verschleißbeständigkeit aufweisen kann, als im Bereich der Axiallagerung.

Ferner kann es zweckmäßig sein, wenn das Gleitlagerelement eine Gleitfläche in Form einer Kugelkalotte aufweist. Die Form einer Kugelkalotte ist einfach herzustellen und bringt darüber hinaus den Vorteil mit sich, dass eine effiziente Radiallagerung und gleichzeitig Axiallagerung der Rotornabe erreicht werden kann.

Darüber hinaus kann vorgesehen sein, dass das innere Ringelement und/oder das äußere Ringelement in Axialrichtung geteilt ausgebildet ist. Dies bringt den Vorteil mit sich, dass die Rotorlagerung einfach zusammengebaut werden kann.

Weiters kann vorgesehen sein, dass jenes Ringelement Axialrichtung geteilt ausgebildet ist, an welchem das Gleitlagerelement nicht angeordnet ist. Durch diese Maßnahme kann erreicht werden, dass die Rotorlagerung trotz der Möglichkeit, diese einfach zusammenzubauen, eine hohe Funktionalität im Einsatz und eine hohe Langlebigkeit aufweist.

Erfindungsgemäß ist ein Verfahren zum Herstellen einer Gondel für eine Windkraftanlage vorgesehen. Das Verfahren umfasst die Verfahrensschritte:
- Bereitstellen eines Gondelgehäuses;
- Bereitstellen einer Rotornabe;
- Bereitstellen einer Rotorlagerung zur Lagerung der Rotornabe am Gondelgehäuse, wobei die Rotorlagerung zumindest ein inneres Ringelement und zumindest ein äußeres Ringelement aufweist, wobei zwischen dem inneren Ringelement und dem äußeren Ringelement zumindest ein Gleitlagerelement ausgebildet ist. Zum Bereitstellen der Rotorlagerung wird das Gleitlagerelement untrennbar mit dem inneren Ringelement verbunden oder wird das Gleitlagerelement untrennbar mit dem äußeren Ringelement verbunden.

Das erfindungsgemäße Verfahren zum Herstellen einer Gondel, insbesondere der Rotorlagerung der Gondel, bringt den überraschenden Vorteil mit sich, dass es einfach durchzuführen ist, und somit wenig fehleranfällig ist, um eine Gondel mit einer hohen Lebensdauer herstellen zu können.

Erfindungsgemäß ist es vorgesehen, dass das Gleitlagerelement durch Beschichten direkt auf das innere Ringelement oder das äußere Ringelement aufgebracht wird. Eine direkt auf das Ringelement aufgebrachte Beschichtung ist besonders einfach und formgenau herzustellen.

Insbesondere kann es vorteilhaft sein, wenn nach dem Beschichten des inneren Ringelementes oder des äußeren Ringelementes die Beschichtung durch mechanische Bearbeitung in die gewünschte Form gebracht wird. Durch diese Maßnahme lässt sich eine hochgenaue Rotorlagerung herstellen, welche somit eine lange Lebensdauer und exzellente Gleiteigenschaften aufweist.

In einer alternativen Ausführungsvariante kann vorgesehen sein, dass das Gleitlagerelement durch Magnetpulsschweißen mittels eines Magnetkrafterzeugers auf das innere Ringelement oder das äußere Ringelement aufgebracht wird. besonders mittels des Verfahrens des Magnetpulsschweißens lassen sich Gleitlagerelemente mit hervorragenden Gleiteigenschaften funktionell in Gondeln von Windkraftanlagen integrieren.

Weiters kann vorgesehen sein, dass die Festigkeit des Gleitlagerelementes kleiner ist als die Festigkeit des inneren Ringelementes und des äußeren Ringelementes. Dies bringt den Vorteil mit sich, dass das Material des Lagerkörpers einfach an das Material des Trägerkörpers angepasst werden kann bzw. mit diesem verpresst werden kann.

Weiters kann vorgesehen sein, dass am inneren Ringelement oder am äußeren Ringelement eine Oberflächenstrukturierung ausgebildet ist und dass zum Applizieren des Gleitlagerelementes am inneren Ringelement oder am äußeren Ringelement das Gleitlagerelement und das innere Ringelement oder das äußere Ringelement aneinandergepresst werden, wobei das Gleitlagerelement an einer Verbindungsfläche zum inneren Ringelement oder zum äußeren Ringelement durch Einwirkung der Oberflächenstrukturierung des inneren Ringelementes oder des äußeren Ringelementes plastisch verformt wird und eine formschlüssige Verbindung mit der Verbindungsfläche bildet. Durch diese Maßnahme kann erreicht werden, dass eine ausreichend festige Verbindung zwischen dem Gleitlagerelement und dem inneren Ringelement oder dem äußeren Ringelement erreicht werden kann, sodass die Rotorlagerung eine hohe Langzeitbeständigkeit aufweist und darüber hinaus einfach herzustellen ist.

Weiters kann es zweckmäßig sein, wenn die Oberflächenstrukturierung der Verbindungsfläche Hinterschneidungen aufweist, in welche das Gleitlagerelementmaterial hineingepresst wird. Durch diese Maßnahme kann eine formschlüssige Verbindung zwischen dem inneren Ringelement oder dem äußeren Ringelement und dem Gleitlager erreicht werden.

Weiters kann vorgesehen sein, dass die Oberflächenstrukturierung mittels eines Lasers hergestellt wird.

In einer weiteren Alternativvariante kann vorgesehen sein, dass die Oberflächenstrukturierung durch ein 3D-Druck-Verfahren hergestellt wird.

Ferner kann vorgesehen sein, dass die Oberflächenstrukturierung Stege aufweist, wobei die Stege beim Aneinanderpressen des Lagerkörpers und des Trägerkörpers verformt werden. Dies bringt den überraschenden Vorteil mit sich, dass die Verbindung zwischen dem Lagerkörper und dem Trägerkörper eine erhöhte Festigkeit aufweisen kann.

Darüber hinaus kann vorgesehen sein, dass die Stege im Wesentlichen im rechten Winkel zur Trägerkörperverbindungsfläche angeordnet sind.

Vorteilhaft ist auch eine Ausprägung, gemäß welcher vorgesehen sein kann, dass sich die Stege während dem Aneinanderpressen des Lagerkörpers und des Trägerkörpers quer zu deren Längserstreckung verbiegen. Hierdurch kann überraschenderweise eine gute Verbindung zwischen dem Trägerkörper und dem Lagerkörper erreicht werden.

Gemäß einer Weiterbildung ist es möglich, dass die Stege in einem Stegkopf eine Kopfquerschnittsbreite aufweisen und dass die Stege an einer Stegbasis eine Basisquerschnittsbreite aufweisen, wobei die Kopfquerschnittsbreite größer ist als die Basisquerschnittsbreite.

Ferner kann es zweckmäßig sein, wenn die Oberflächenstrukturierung der Trägerkörperverbindungsfläche mittels eines Umformverfahrens, insbesondere durch Rändeln, hergestellt wird. Besonders mittels einem derartigen Abwälzverfahren kann die benötigte Oberflächenstruktur des Trägerkörpers einfach hergestellt werden.

Ferner kann es zweckmäßig sein, wenn die Oberflächenstrukturierung der Verbindungsfläche Kreuzrändel oder Links-Rechtsrändel aufweist. Überraschenderweise bringt das Verfahren des Kreuzrändeln oder Links-Rechtsrändeln bzw. die dadurch hergestellten Oberflächen gegenüber allen anderen Oberflächenstrukturierungen oder glatten Oberflächen eine verbesserte Haltbarkeit zwischen dem Lagerkörper und dem Trägerkörper mit sich. Derartige Rändelverfahren sind in der DIN 8583-5, DIN 82, DIN 403 genormt. Insbesondere kann für die obig genannten Rändel laut Norm folgende Bezeichnung verwendet werden: RGE: Links-Rechtsrändel, Spitzen erhöht (Fischhaut); RGV: Links-Rechtsrändel, Spitzen vertieft; RKE: Kreuzrändel, Spitzen erhöht; RKV: Kreuzrändel, Spitzen vertieft.

Beim Rändeln wird zwischen dem spanlosen Rändeldrücken und dem spanenden Rändelfräsen unterschieden. Je nach Verfahren wird mit Rändelrädern das Profil hineingedrückt oder an einer Rändelfräse gefräst. An CNC-Drehmaschinen mit angetriebenen Werkzeugen können auch spezielle Rändelfräswerkzeuge eingesetzt werden, um ein Umspannen auf andere Maschinen zu vermeiden. Da die Bearbeitungskräfte beim Fräsen geringer ausfallen, findet es vorwiegend bei dünnen Werkstücken oder auf Bearbeitungszentren Verwendung.

Insbesondere die obig beschriebenen durch Kreuzrändeln oder Links-Rechtsrändeln hergestellten Oberflächen in Verbindung mit einer zylindrisch oder in Form eines Zylindersegmentes ausgebildeten Trägerkörperverbindungsfläche und Lagerkörperverbindungsfläche bringen eine besonders verbesserte Haltbarkeit zwischen dem Trägerkörper und dem Lagerkörper mit sich.

Weiters kann vorgesehen sein, dass das Gleitlagerelement durch Auftragschweißen direkt auf das innere Ringelement oder das äußere Ringelement hergestellt wird.

Entsprechend einer vorteilhaften Weiterbildung kann vorgesehen sein, dass die Schicht des auftraggeschweißten Materials eine Schichtdicke zwischen 0,5mm und 1,5mm, insbesondere zwischen 0,8mm und 1,2mm aufweist. Eine derartige Schichtdicke bringt den Vorteil mit sich, dass sie gute Gleiteigenschaften aufweisen kann, dabei verfahrenstechnisch gut herzustellen ist und darüber hinaus eine ausreichende Lebensdauer aufweisen kann.

Die Schichtdicke bemisst sich von der Oberfläche des Werkstückes vor dem Auftragschweißvorgang auf die Gleitoberfläche.

Insbesondere kann es vorteilhaft sein, wenn die Gleitoberfläche an der Schicht des auftraggeschweißten Materials eine gemittelte Rautiefe Rz zwischen 0,1 µm und 3,2 µm, insbesondere zwischen 0,5 µm und 1,6 µm aufweist. Besonders Oberflächen mit einer derartigen gemittelten Rautiefe Rz bringen gute Gleiteigenschaften mit sich und sind darüber hinaus an der Schicht des auftraggeschweißten Materials einfach herzustellen.

Ferner kann vorgesehen sein, dass das auftraggeschweißte Material aus einem Werkstoff besteht oder diesen umfasst, der ausgewählt ist aus einer Gruppe umfassend Aluminiumbasislegierungen, Zinnbasislegierungen, Bronzebasislegierungen, Messingbasislegierungen. Besonders derartige Werkstoffe bringen gute Gleiteigenschaften mit sich.

Darüber hinaus kann vorgesehen sein, dass das auftraggeschweißte Material aus einem Werkstoff besteht oder diesen umfasst, der zumindest zwei Werkstoffe umfasst, die ausgewählt sind aus einer Gruppe umfassend Aluminium, Zinn, Bronze, Messing. Eine derartige Kombination aus mehreren Werkstoffen bringt den Vorteil mit sich, dass verschiedene positive Eigenschaften der einzelnen Werkstoffe vereint werden können, um neben guten Gleiteigenschaften auch eine große Langzeitbeständigkeit aufweisen zu können.

Vorteilhaft ist auch eine Ausprägung, gemäß welcher vorgesehen sein kann, dass für die Radiallagerung und die Axiallagerung auftraggeschweißte Materialien aus unterschiedlichen Werkstoffen ausgebildet sind. Hierdurch können verschiedene Materialien mit verschieden Materialeigenschaften miteinander kombiniert werden. Insbesondere kann hierdurch für die jeweils unterschiedlichen Belastungen der Radiallagerung und der Axiallagerung jeweils ein auftraggeschweißtes Material mit den für die jeweilige Belastung angepassten Eigenschaften verwendet werden.

Die Verfahren des Thermischen Spritzens zählen ebenfalls zu den Oberflächenbeschichtungsverfahren. Laut der normativen Definition (DIN EN 657) werden dabei Zusatzwerkstoffe, die so genannten Spritzzusätze, innerhalb oder außerhalb eines Spritzbrenners ab-, an- oder aufgeschmolzen, in einem Gasstrom in Form von Spritzpartikeln beschleunigt und auf die Oberfläche des zu beschichtenden Bauteils geschleudert. Die Bauteiloberfläche wird dabei im Gegensatz zum Auftragschweißen nicht angeschmolzen und nur in geringem Maße thermisch belastet. Somit sind die Verfahren des Auftragschweißen und des Thermischen Spritzens auch eindeutig voneinander zu unterscheiden.

Als untrennbare Verbindung im Sinne dieses Dokumentes wird jede Verbindung gesehen, welche nicht gelöst werden kann, ohne dabei das Gleitlagerelement und/oder das damit verbundene Ringelement in dessen Struktur zumindest teilweise zu zerstören. Eine Verbindung mittels eines lösbaren Befestigungsmittels, wie etwa einer Schraube, wird nicht als untrennbare Verbindung im Sinne dieses Dokumentes gesehen. Auch eine Verbindung mittels eines nur durch Zerstörung lösbaren Befestigungsmittels, wie etwa einer Niete, wird nicht als untrennbare Verbindung im Sinne dieses Dokumentes gesehen. Eine derartige untrennbare Verbindung kann beispielsweise eine stoffschlüssige Verbindung sein.

Als Gleitlagerelement in Form einer Beschichtung im Sinne dieses Dokumentes wird eine Schicht verstanden, welche durch Beschichten, einer Hauptgruppe der Fertigungsverfahren nach DIN 8580, auf einen Träger aufgebracht wird. Bei der Beschichtung kann es sich um eine dünne Schicht oder eine dicke Schicht sowie um mehrere in sich zusammenhängende Schichten handeln. Die Beschichtungsverfahren unterscheiden sich durch die Art der Schichtaufbringung in chemische, mechanische, thermische und thermomechanische Verfahren.

Weiters kann vorgesehen sein, dass Laserauftragschweißen, insbesondere Laser-Pulver-Auftragschweißen, als Schweißverfahren verwendet wird.

Es ist weiter möglich, dass auf dem Gleitlagerelement eine polymerbasierte Einlaufschicht angeordnet ist, um damit eine bessere Anpassungsfähigkeit der Gleitlagerlauffläche an die Gegenlauffläche während des Einlaufens des Gleitschicht zu erreichen, wobei zusätzlich von Vorteil ist, dass diese Einlaufschicht ebenfalls die Tribologie des Gleitlagers an sich verbessert. Dabei ist von Vorteil, dass diese polymerbasierte Einlaufschicht mit einem Sprühverfahren aufgetragen werden kann.

Alternativ dazu kann vorgesehen sein, dass das komplette Gleitlagerelement aus einem polymerbasierten Werkstoff gebildet ist. Dabei ist von Vorteil, dass das Gleitlagerelement mittels eines Sprühverfahrens direkt auf das innere Ringelement oder das äußere Ringelement aufgetragen werden kann.

Als Auftragschweißen oder Cladding nach DIN 8590 - "Beschichten durch Schweißen" wird ein Schweißvorgang bezeichnet, bei dem ausschließlich durch den Schweißzusatzwerkstoff, wie etwa Draht oder Pulver, ein Volumenaufbau, meist in Form einer Deckschicht, stattfindet. Hierbei wird die Bauteiloberfläche, auf die auftraggeschweißt wird, angeschmolzen. Es zählt somit zu den Oberflächenbeschichtungsverfahren.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Querschnitt eines ersten Ausführungsbeispiels einer Gondel in einer stark schematischen Darstellung;
- Fig. 3: ein Querschnitt eines zweiten Ausführungsbeispiels einer Gondel in einer stark schematischen Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

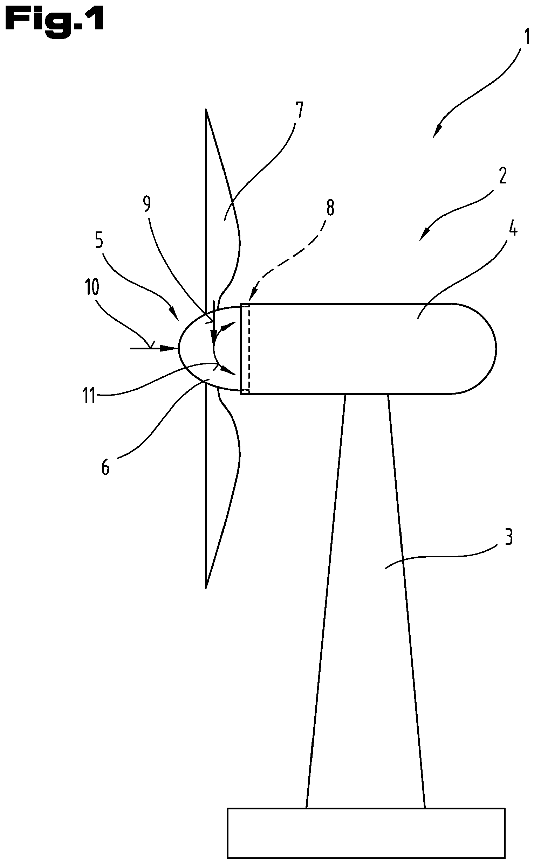

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen.

Die Rotorlagerung 8, welche zur Lagerung der Rotornabe 6 am Gondelgehäuse 4 der Gondel 2 dient, ist zur Aufnahme einer Radialkraft 9, einer Axialkraft 10 und eines Kippmomentes 11 ausgebildet. Die Axialkraft 10 ist bedingt durch die Kraft des Windes. Die Radialkraft 9 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 9 das Kippmoment 11 hervorgerufen. Das Kippmoment 11 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

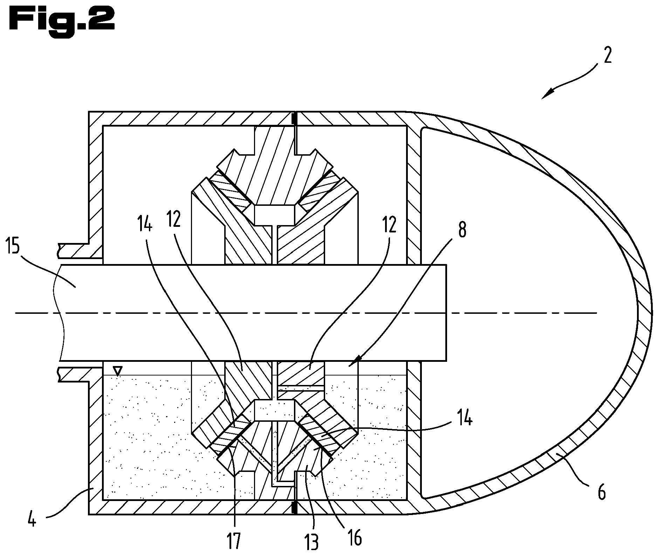

In Fig. 2 ist das Gondelgehäuse 4 und die Rotornabe 6 in einer schematischen Schnittdarstellung dargestellt, wobei der Aufbau, insbesondere in dessen Dimensionierung stark schematisiert wurde. Wie aus Fig. 2 ersichtlich, kann vorgesehen sein, dass die Rotorlagerung 8 zumindest ein inneres Ringelement 12 und zumindest ein äußeres Ringelement 13 aufweist. Zwischen dem inneren Ringelement 12 und dem äußeren Ringelement 13 ist zumindest ein Gleitlagerelement 14 angeordnet.

Wie aus Fig. 2 ersichtlich, kann vorgesehen sein, dass das innere Ringelement 12 mit der Rotornabe 6 gekoppelt ist. Insbesondere kann vorgesehen sein, dass eine Rotorwelle 15 ausgebildet ist, an welcher die Rotornabe 6 angeordnet ist. Das innere Ringelement 12 kann direkt an der Rotorwelle 15 aufgenommen sein.

In wieder einem weiteren, nicht dargestellten Ausführungsbeispiel kann natürlich auch vorgesehen sein, dass das innere Ringelement 12 am Gondelgehäuse 4 befestigt ist, und dass die Rotornabe 6 mit dem äußeren Ringelement 13 gekoppelt ist.

Wie aus Fig. 2 ersichtlich, kann vorgesehen sein, dass sowohl das innere Ringelement 12 als auch das äußere Ringelement 13 V-förmig ausgebildet sind und jeweils an der V-förmigen Flanke zwischen den beiden Ringelementen 12, 13 axial zueinander beabstandet zwei Gleitlagerelemente 14 ausgebildet sind, welche in einem Winkel zueinander angeordnet sind. Wie aus Fig. 2 weiters ersichtlich, kann vorgesehen sein, dass die Gleitlagerelemente 14 direkt am inneren Ringelement 12 angeordnet sind. Somit kann zwischen den Gleitlagerelementen 14 und dem äußeren Ringelement 13 eine Gleitfläche 16 ausgebildet sein. Bei einer Anordnung der Gleitlagerelemente 14, wie sie in Fig. 2 dargestellt ist, können die Gleitflächen 16 ebenfalls V-förmig angeordnet sein.

Wie aus Fig. 2 ebenfalls ersichtlich, kann vorgesehen sein, dass das innere Ringelement 12 bezüglich dessen axialer Erstreckung oder alternativ auch entlang einer Mittelachse geteilt ausgeführt ist um den Zusammenbau der Rotorlagerung 8 zu erleichtern.

In einem nicht dargestellten Ausführungsbeispiel ist es natürlich auch denkbar, dass das innere Ringelement 12 nicht wie im in Fig. 2 dargestellten Ausführungsbeispiel eine Nut bildet, sondern die V-Förmige Anordnung umgekehrt ausgebildet ist, sodass am inneren Ringelement 12 ein V-Förmiger Vorsprung ausgebildet ist. In diesem Fall kann zum leichteren Zusammenbau vorgesehen sein, dass das äußere Ringelement 13 in dessen axialer Erstreckung oder alternativ auch entlang einer Mittelachse geteilt ausgeführt ist.

Sowohl bei einer Ausführung mit in axialer Erstreckung geteiltem inneren Ringelement 12, als auch bei einer Ausführung mit in axialer Erstreckung geteiltem äußeren Ringelement 13 kann vorgesehen sein, dass die Einzelteile des jeweils geteilt ausgeführten Ringelementes 12, 13 axial zueinander verstellbar ausgebildet sind, um beispielsweise den Verschleiß der Gleitlagerelemente 14 kompensieren zu können. Insbesondere kann vorgesehen sein, dass durch die axiale Verstellbarkeit der Einzelteile der Ringelemente 12, 13 zueinander der Lagerspalt eingestellt werden kann.

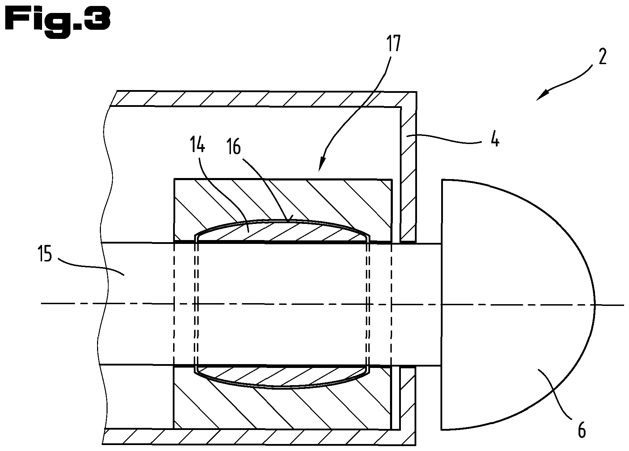

In der Fig. 3 ist eine weitere und gegebenenfalls für sich eigenständige Ausführungsform der Gondel 2 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, es ist erfindungsgemäß vorgesehen, dass das Gleitlagerelement 14 als Beschichtung ausgebildet ist, welche direkt auf das innere Ringelement 12 aufgebracht ist, wobei das innere Ringelement 12 als integraler Bestandteil der Rotorwelle 15 zur Aufnahme der Rotornabe 6 ausgebildet ist.

Das Gleitlagerelement 14 weist in diesem Ausführungsbeispiel eine Gleitfläche 16 in Form einer Kugelkalotte auf. Das Gleitlagerelement 14 ist hierbei zur gleichzeitigen Radiallagerung und Axiallagerung der Rotornabe 6 ausgebildet.

Wie aus Fig. 3 weiters ersichtlich, kann vorgesehen sein, dass das äußere Ringelement 13 als integraler Bestandteil eines im Gondelgehäuse 4 aufgenommenen Lagerbockes 17 ausgebildet ist. Wie aus Fig. 3 weiters ersichtlich, kann vorgesehen sein, dass der Lagerbock 17 entlang einer Mittelachse in einen Oberteil und einen Unterteil geteilt ausgebildet ist.

In einer weiteren, nicht dargestellten Ausführungsvariante kann vorgesehen sein, dass das Gleitlagerelement 14 ist zur gleichzeitigen Radiallagerung und Axiallagerung der Rotornabe 6 konusförmig oder V-förmig ausgebildet ist.

In einer weiteren, nicht dargestellten Ausführungsvariante kann vorgesehen sein, dass das Gleitlagerelement 14 zur gleichzeitigen Radiallagerung und Axiallagerung der Rotornabe 6 eine zylindrische Radial - Gleitlagerlauffläche aufweist und stirnseitig eine Axial- Gleitlagerlauffläche aufweist. Diese Axial- Gleitlagerlauffläche kann beispielsweise in Form einer Abstufung ausgebildet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Windkraftanlage
- 2: Gondel
- 3: Turm
- 4: Gondelgehäuse
- 5: Rotor
- 6: Rotornabe
- 7: Rotorblatt
- 8: Rotorlagerung
- 9: Radialkraft
- 10: Axialkraft
- 11: Kippmoment
- 12: inneres Ringelement
- 13: äußeres Ringelement
- 14: Gleitlagerelement
- 15: Rotorwelle
- 16: Gleitfläche
- 17: Lagerbock

## Patentansprüche

1. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein Gleitlagerelement (14) ausgebildet ist,
wobei das Gleitlagerelement (14) untrennbar mit dem inneren Ringelement (12) verbunden ist oder wobei das Gleitlagerelement (14) untrennbar mit dem äußeren Ringelement (13) verbunden ist, **dadurch gekennzeichnet, dass** das Gleitlagerelement (14) als Beschichtung ausgebildet ist, welche direkt auf das innere Ringelement (12) oder das äußere Ringelement (13) aufgebracht ist.

2. Gondel (2) nach Anspruch 1, **dadurch gekennzeichnet, dass** das innere Ringelement (12) als integraler Bestandteil einer Rotorwelle (15) zur Aufnahme der Rotornabe (6) oder als integraler Bestandteil der Rotornabe (6) selbst ausgebildet ist.

3. Gondel (2) nach Anspruch 1 oder 2, **dadurch gekennzeichnet, dass** das äußere Ringelement (13) als integraler Bestandteil des Gondelgehäuses (4) oder eines im Gondelgehäuse (4) aufgenommenen Lagerbockes (17) ausgebildet ist.

4. Gondel (2) nach einem der vorhergehenden Ansprüche, **dadurch gekennzeichnet, dass** das Gleitlagerelement (14) stoffschlüssig mit dem inneren Ringelement (12) verbunden ist oder dass das Gleitlagerelement (14) stoffschlüssig mit dem äußeren Ringelement (13) verbunden ist.

5. Gondel (2) nach einem der vorhergehenden Ansprüche, **dadurch gekennzeichnet, dass** das Gleitlagerelement (14) zur gleichzeitigen Radiallagerung und Axiallagerung der Rotornabe (6) ausgebildet ist.

6. Gondel (2) nach Anspruch 5, **dadurch gekennzeichnet, dass** das Gleitlagerelement (14) im Bereich der Radiallagerung andere Materialeigenschaften aufweist, als im Bereich der Axiallagerung.

7. Gondel (2) nach einem der vorhergehenden Ansprüche, **dadurch gekennzeichnet, dass** das Gleitlagerelement (14) eine Gleitfläche (16) in Form einer Kugelkalotte aufweist.

8. Gondel (2) nach einem der vorhergehenden Ansprüche, **dadurch gekennzeichnet, dass** das innere Ringelement (12) und/oder das äußere Ringelement (13) in Axialrichtung geteilt ausgebildet ist.

9. Gondel (2) nach Anspruch 8, **dadurch gekennzeichnet, dass** jenes Ringelement (12, 13) in Axialrichtung geteilt ausgebildet ist, an welchem das Gleitlagerelement (14) nicht angeordnet ist.

10. Verfahren zum Herstellen einer Gondel (2) für eine Windkraftanlage (1), das Verfahren umfassend die Verfahrensschritte:
- Bereitstellen eines Gondelgehäuses (4);
- Bereitstellen einer Rotornabe (6);
- Bereitstellen einer Rotorlagerung (8) zur Lagerung der Rotornabe (6) am Gondelgehäuse (4), wobei die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein Gleitlagerelement (14) ausgebildet ist,
wobei zum Bereitstellen der Rotorlagerung (8) das Gleitlagerelement (14) untrennbar mit dem inneren Ringelement (12) verbunden wird oder dass das Gleitlagerelement (14) untrennbar mit dem äußeren Ringelement (13) verbunden wird, **dadurch gekennzeichnet, dass** das Gleitlagerelement (14) durch Beschichten direkt auf das innere Ringelement (12) oder das äußere Ringelement (13) aufgebracht wird.

11. Verfahren nach Anspruch 10, **dadurch gekennzeichnet, dass** nach dem Beschichten des inneren Ringelementes (12) oder des äußeren Ringelementes (13) die Beschichtung durch mechanische Bearbeitung in die gewünschte Form gebracht wird.

12. Verfahren nach Anspruch 9, **dadurch gekennzeichnet, dass** das Gleitlagerelement (14) durch Magnetpulsschweißen mittels eines Magnetkrafterzeugers auf das innere Ringelement (12) oder das äußere Ringelement (13) aufgebracht wird.

## Claims

1. A nacelle (2) for a wind turbine (1), the nacelle (2) comprising:
- a nacelle housing (4);
- a rotor hub (6);
- a rotor bearing (8) for bearing the rotor hub (6) on the nacelle housing (4), wherein the rotor bearing (8) has at least one inner ring element (12) and at least one outer ring element (13), wherein at least one sliding bearing element (14) is formed between the inner ring element (12) and the outer ring element (13),
wherein the sliding bearing element (14) is inseparably connected to the inner ring element (12) or wherein the sliding bearing element (14) is inseparably connected to the outer ring element (13), **characterized in that** the sliding bearing element (14) is formed as a coating which is applied directly to the inner ring element (12) or the outer ring element (13).

2. The nacelle (2) according to claim 1, **characterized in that** the inner ring element (12) is formed as an integral part of a rotor shaft (15) for receiving the rotor hub (6) or as an integral part of the rotor hub (6) itself.

3. The nacelle (2) according to claim 1 or 2, **characterized in that** the outer ring element (13) is formed as an integral part of the nacelle housing (4) or of a bearing block (17) accommodated in the nacelle housing (4).

4. The nacelle (2) according to one of the preceding claims, **characterized in that** the sliding bearing element (14) is materially bonded to the inner ring element (12) or that the sliding bearing element (14) is materially bonded to the outer ring element (13).

5. The nacelle (2) according to one of the preceding claims, **characterized in that** the sliding bearing element (14) is embodied for simultaneous radial bearing and axial bearing of the rotor hub (6).

6. The nacelle (2) according to claim 5, **characterized in that** the sliding bearing element (14) has other material properties in the region of the radial bearing than it has in the region of the axial bearing.

7. The nacelle (2) according to one of the preceding claims, **characterized in that** the sliding bearing element (14) has a sliding surface (16) in the form of a spherical cap.

8. The nacelle (2) according to one of the preceding claims, **characterized in that** the inner ring element (12) and/or the outer ring element (13) is formed being parted in the axial direction.

9. The nacelle (2) according to claim 8, **characterized in that** the ring element (12, 13), on which the sliding bearing element (14) is not arranged, is formed being parted in the axial direction.

10. A method for producing a nacelle (2) for a wind turbine (1), the method comprising the method steps:
- providing a nacelle housing (4);
- providing a rotor hub (6);
- providing a rotor bearing (8) for bearing the rotor hub (6) on the nacelle housing (4), wherein the rotor bearing (8) has at least one inner ring element (12) and at least one outer ring element (13), wherein at least one sliding bearing element (14) is formed between the inner ring element (12) and the outer ring element (13),
wherein, for providing the rotor bearing (8), the sliding bearing element (14) is inseparably connected to the inner ring element (12) or the sliding bearing element (14) is inseparably connected to the outer ring element (13), **characterized in that** the sliding bearing element (14) is applied directly to the inner ring element (12) or the outer ring element (13) by coating.

11. The method according to claim 10, **characterized in that**, after coating the inner ring element (12) or the outer ring element (13), the coating is brought into the desired shape by mechanical processing.

12. The method according to claim 9, **characterized in that** the sliding bearing element (14) is applied to the inner ring element (12) or to the outer ring element (13) by magnetic pulse welding by means of a magnetic force generator.

## Revendications

1. Nacelle (2) pour une éolienne (1), cette nacelle (2) comprenant :
- un boîtier de nacelle (4) ;
- un moyeu de rotor (6) ;
- un palier de rotor (8) pour le logement du moyeu de rotor (6) sur le boîtier de nacelle (4), dans lequel le palier de rotor (8) comprend au moins un élément annulaire interne (12) et au moins un élément annulaire externe (13), dans lequel, entre l'élément annulaire interne (12) et l'élément annulaire externe (13), est prévu au moins un élément de palier lisse (14),
dans lequel l'élément de palier lisse (14) est relié de manière inséparable avec l'élément annulaire interne (12) ou dans lequel l'élément de palier lisse (14) est relié de manière inséparable avec l'élément annulaire externe (13), **caractérisée en ce que** l'élément de palier lisse (14) est conçu comme un revêtement qui est appliqué directement sur l'élément annulaire interne (12) et l'élément annulaire externe (13).

2. Nacelle (2) selon la revendication 1, **caractérisée en ce que** l'élément annulaire interne (12) fait partie intégrante d'un arbre de rotor (15) pour le logement du moyeu de rotor (6) ou fait partie intégrante du moyeu de rotor (6) lui-même.

3. Nacelle (2) selon la revendication 1 ou 2, **caractérisée en ce que** l'élément annulaire externe (13) fait partie intégrante du boîtier de nacelle (4) ou d'un support de palier (17) logé dans le boîtier de nacelle (4).

4. Nacelle (2) selon l'une des revendications précédentes, **caractérisée en ce que** l'élément de palier lisse (14) est relié avec l'élément annulaire interne (12) par liaison de matière ou **en ce que** l'élément de palier lisse (14) est relié avec l'élément annulaire externe (13) par liaison de matière.

5. Nacelle (2) selon l'une des revendications précédentes, **caractérisée en ce que** l'élément de palier lisse (14) est conçu pour un logement à la fois radial et axial du moyeu de rotor (6).

6. Nacelle (2) selon la revendication 5, **caractérisée en ce que** l'élément de palier lisse (14) présente, au niveau du logement radial, des propriétés de matériau différentes de celles qu'il présente au niveau du logement axial.

7. Nacelle (2) selon l'une des revendications précédentes, **caractérisée en ce que** l'élément de palier lisse (14) présente une surface lisse (16) sous la forme d'une calotte sphérique.

8. Nacelle (2) selon l'une des revendications précédentes, **caractérisée en ce que** l'élément annulaire interne (12) et/ou l'élément annulaire externe (13) sont divisés dans la direction axiale.

9. Nacelle (2) selon la revendication 8, **caractérisée en ce que** l'élément annulaire (12, 13) divisé dans la direction axiale est celui sur lequel l'élément de palier lisse (14) n'est pas disposé.

10. Procédé de fabrication d'une nacelle (2) pour une éolienne (1), ce procédé comprenant les étapes suivantes :
- mise à disposition d'un boîtier de nacelle (4) ;
- mise à disposition d'un moyeu de rotor (6) ;
- mise à disposition d'un palier de rotor (8) pour le logement du moyeu de rotor (6) sur le boîtier de nacelle (4), dans lequel le palier de rotor (8) comprend au moins un élément annulaire interne (12) et au moins un élément annulaire externe (13), dans lequel, entre l'élément annulaire interne (12) et l'élément annulaire externe (13), est prévu au moins un élément de palier lisse (14),
dans lequel, pour la mise à disposition du palier de rotor (8), l'élément de palier lisse (14) est relié de manière inséparable avec l'élément annulaire interne (12) ou dans lequel l'élément de palier lisse (14) est relié de manière inséparable avec l'élément annulaire externe (13), **caractérisée en ce que** l'élément de palier lisse (14) est appliquée en tant que revêtement directement sur l'élément annulaire interne (12) et l'élément annulaire externe (13).

11. Procédé selon la revendication 10, **caractérisé en ce que**, après le revêtement de l'élément annulaire interne (12) ou de l'élément annulaire externe (13), le revêtement est appliqué par usinage mécanique dans la forme souhaitée.

12. Procédé selon la revendication 9, **caractérisé en ce que** l'élément de palier lisse (14) est monté par soudure par impulsion magnétique au moyen d'un générateur de force magnétique sur l'élément annulaire interne (12) ou sur l'élément annulaire externe (13).
